# EUROPEAN PATENT APPLICATION

(11) **EP 4 289 902 A1**
(43) Date of publication of application: **13.12.2023**
(21) Application number: 23178192.3
(22) Date of filing: 08.06.2023
(51) Int. Cl.: C08L 91/06, C08L 25/04, C08L 67/06

(54) **MONOMER SUPPRESSANT COMPOSITIONS**

(30) Priority: 08.06.2022 GB 202208380
(71) Applicant: Bowden Chemicals Limited, Worthing Sussex BN11 1TF (GB)
(72) Inventor: DARBY, Paul, Grimsby, DN33 2DD (GB)
(74) Representative: Gilholm, Stephen Philip

(57) **Abstract**

There is described a monomer suppressant additive composition, wherein said additive composition comprises paraffin wax, at least one synergistic wax, at least one hydrocarbon solvent, and at least one reactive diluent.

## Description

### Field of the invention

The present invention relates to compositions for use in reduction or suppression of emissions in the manufacture and/or processing of polyester resins.

More particularly, the invention relates to compositions for use in reduction of emissions of monomers, such as, styrene, vinyl toluene and the like, during the manufacture and/ or subsequent processing of polyester resins, for instance, in the production of fibre-reinforced laminates.

### Background of the invention

Certains monomeric derivatives of benzene, such as, styrene, vinyl toluene and the like, are used as monomeric precursors to polymeric material, such as polystyrene, etc.

However, one problem that occurs in the manufacturing process, particularly in the manufacture of polyester laminates, is the evaporation of styrene monomer from the surface of the laminate in the interval between lay-up and cure.

Styrene is a hazardous material, acute (short-term) exposure to styrene in humans results in mucous membrane and eye irritation, and gastrointestinal effects.

Moreover, chronic (long-term) exposure to styrene in humans results in effects on the central nervous system (CNS), such as headache, fatigue, weakness, and depression, CSN dysfunction, hearing loss, and peripheral neuropathy.

In the USA, The National Institute for Occupational Safety and Health (NIOSH) recommends exposure limits for styrene of Total Weight Average (TWA) workplace exposure limit (in an 8 hour period) of 50 ppm (215 mg/m³); and a Short Term Exposure Limit (STEL) of 100 ppm (425 mg/m³).

Conventional unsaturated polyester laminating resins, while exhibiting excellent secondary bonding and good mechanical properties, may contribute to higher styrene monomer levels to the workplace environment. Historically, low styrene monomer emission technology has centred around the use of conventional additives acting as suppressants. Unfortunately, these suppressants can decrease interlaminar adhesion.

The use of paraffin wax has been proposed to decrease styrene emissions. For example, US Patent No. 4,387,171 describes the incorporation of a waxy compound, such as paraffin wax, to restriction styrene emissions.

However, there are limitations in the current options that include:
- Crystallisation of the paraffin wax.
- Syneresis of the components.
- Limitations in the type of resin where they are effective.
- Concerns regarding inter-laminate adhesion in certain applications such as boat building.
- Cost.

There is therefore a need for an improved composition for the suppression of emissions of styrene, vinyl toluene, and the like during the process of polymer manufacture and/or laminate processing.

We have now surprisingly found a composition which overcomes or mitigates the previous attempts at suppression of styrene emissions.

### Summary of the invention

Thus, according to a first aspect of the invention there is provided a monomer suppressant additive composition, wherein said additive composition comprises paraffin wax, at least one synergistic wax, at least one hydrocarbon solvent, and at least one reactive diluent.

### Paraffin Wax

In the composition of the invention the paraffin wax may be present in an amount of from about 5 to about 20% w/w, preferably from about 8 to about 18% w/w, more preferably from about 10 to about 16% w/w.

Paraffin wax is commercially available as general grades:
- Low Melting: 46°C to 51°C
- Mid Melting: 52°C to 62°C
- High Melting: 63°C to 68°C

In the present invention any of the aforementioned grades may suitably be used, i.e. the paraffin wax may have a melting point in the range of from about 46°C to about 68°C. However, a mid-melting grade of paraffin wax is preferred, that is, a paraffin wax with a melting point of from about 52°C to about 62°C. It will be understood that a mixture of paraffin waxes may suitably be used, including a mixture of low/mid-melting paraffin waxes, a mixture of mid/high-melting paraffin waxes, a mixture of low/high-melting paraffin waxes, or a mixture of low/mid/high-melting paraffin waxes. When a mid-melting grade of paraffin wax is used, the paraffin wax may preferably be a paraffin 56/58.

### Synergistic Wax

In the composition of the invention the synergistic wax may be present in an amount of from about 10 to about 30% w/w, preferably from about 15 to about 30% w/w, more preferably from about 20 to about 30% w/w, most preferably from about 24 to about 28% w/w.

In one aspect of the present invention the synergistic wax comprises a fatty acid ester or a mixture of fatty acid esters. The fatty acid ester may be a saturated or unsaturated fatty acid ester, including monounsaturated and polyunsaturated fatty acids. However, saturated fatty acid esters are preferred. The synergistic wax may comprise a mixture or blend of fatty acid esters.

Fatty acids can be classified according to the number of carbon atoms in the alkyl chain length. Thus, fatty acids can be classified as:
- short-chain fatty acids (2-4 carbon atoms)
- medium-chain fatty acids (6-10 carbon atoms)
- long-chain fatty acids (12-26 carbon atoms)

In the present invention any of the aforementioned fatty acids may suitably be used, i.e. the fatty acid may have a chain length in the range of from about 2 to about 26 carbon atoms. However, long-chain fatty acids are preferred. This the preferred fatty acid may have a chain length of from 12 to 26 carbon atoms, preferably the fatty acid may have a chain length of from 14 to 24 carbon atoms, more preferably the fatty acid may have a chain length of from 16 to 22 carbon atoms. The term fatty acid shall include hydroxyl fatty acids. Specific fatty acids which may be mentioned include, but shall not be limited to, palmitates, stearates, and polyhydroxystearate.

Specific fatty acid esters which may be mentioned include, but shall not be limited to, cetyl palmitate, butyl stearate and ethylhexyl stearoyl polyhydroxystearate; and mixtures or blends thereof.

In particular aspect of the present invention the synergistic wax is bio-sourced or part bio-sourced and from sustainable sources.

### Hydrocarbon Solvent

In the composition of the invention the hydrocarbon solvent may be present in an amount of from about 20 to about 40% w/w, preferably from about 22 to about 38% w/w, more preferably from about 25 to about 35% w/w, most preferably from about 28 to about 32% w/w, e.g. about 30% w/w.

The hydrocarbon solvent may comprise aliphatic, open chain or alicyclic, e.g. aromatic, hydrocarbons, or a mixture thereof. In a particular aspect of the invention the hydrocarbon solvent may have a boiling point of about 220°C or less. Preferred hydrocarbon solvents include solvents based on C10-C13 hydrocarbons. The hydrocarbon solvents may comprise a mixture C10-C13 hydrocarbons. Preferred hydrocarbon solvents have an aromatics level of < 2% w/w. Particular hydrocarbon solvents which may be mentioned include, but shall not be limited to, Shellsol D60 (CAS 64742-48-9) and white spirits.

### Reactive Diluent

In the composition of the invention the reactive diluent may be present in an amount of from about 20 to about 40% w/w, preferably from about 22 to about 38% w/w, more preferably from about 25 to about 35% w/w, most preferably from about 28 to about 32% w/w, e.g. about 30% w/w.

The reactive diluent may vary depending upon, *inter alia,* the nature of the polymer and/or the monomer(s) used in the manufacture of the polymer. In one aspect of the invention the reactive diluent is a monomer. Examples of such monomers include, but shall not be limited to, styrene, vinyl toluene, p-methyl styrene and ethyl vinyl benzene; and mixtures thereof.

The use of vinyl toluene, p-methyl styrene and/or ethyl vinyl benzene, i.e. avoiding the use of styrene is especially useful for a sub-group of polyester resins where the reactive diluent is vinyl toluene, p-methyl styrene or ethyl vinyl benzene. In such products the user would not want to incorporate an additive that contains styrene, but that there are applications where there is the need to reduce the emissions and odour of the vinyl toluene.

The monomer suppressant additive composition of the present invention brings the following, non-limiting, benefits:
- Bio-sourced / Part bio-sourced constituents
- Ease of storage & incorporation
- Versatility with applicability to Orthophthalic / Dicyclopentadiene / Isophthalic Polyester Resins
- High efficacy in terms of styrene emission reduction
- Maintenance of Inter-Laminate adhesion
- A Styrene Free option

According to a further aspect of the invention there is provided a method of manufacturing a polymer, polymer resin, polymer laminate or polymer material using a monomer suppressant additive composition as herein described.

According to this aspect of the invention the method comprises a first step of dissolving the paraffin wax in a mixture of the hydrocarbon solvent and the reactive diluent at a temperature not exceeding 70°C; and a second step of dissolving the synergistic wax paraffin wax/ hydrocarbon solvent/ reactive diluent solution at a temperature not exceeding 50°C.

According to this aspect of the invention the additive composition may comprise a solution or a paste. In a preferred aspect of the invention the additive composition is in the form of a paste.

According to another aspect of the invention the additive composition may be incorporated into a polymer, polymer resin, polymer laminate or polymer material at a level of from about 0.5 to about 2.5%w/w. In a preferred aspect of the invention the additive composition is pre-conditioned by warming to a temperature of from about 25 to about 35°C prior to being incorporated into a polymer, polymer resin, polymer laminate or polymer material at a level of from about 0.5 to about 2.5%w/w.

According to a yet further aspect of the invention there is provided a polymer, polymer resin, polymer laminate or polymer material manufactured according to the method herein described.

Polyester resins find use in a wide variety of areas, including, but not limited to, construction materials, such as anchor bolts, use in packaging material, use in the manufacture of furniture e.g., outdoor items, use in aircraft, vehicles, and the marine industry, use in appliances, use in composite materials, such as, fiberglass resin, and use in surface coatings. Therefore, the term "polymer material" may be construed as encompassing any of the aforementioned.

The method of the invention is advantageous in that, *inter alia,* at a level of 1% w/w of additive composition of the invention, in controlled laboratory tests, reduces styrene or vinyl toluene emission from 60 g/m² / 30 min to < 30 g/m² (measured over a 30 minute period).

Furthermore, incorporation of any of the additive composition of the invention at a level of 1% w/w in controlled laboratory tests maintains inter-laminate adhesion > 60% of the unmodified control.

According to a further aspect of the invention there is provided the use of a monomer suppressant additive composition, wherein said additive composition comprises paraffin wax, at least one synergistic wax, at least one hydrocarbon solvent, and at least one reactive diluent in the manufacture of a polymer, polymer resin, polymer laminate or polymer material.

The invention will now be described by way of example only and with reference to the accompanying figure in which:

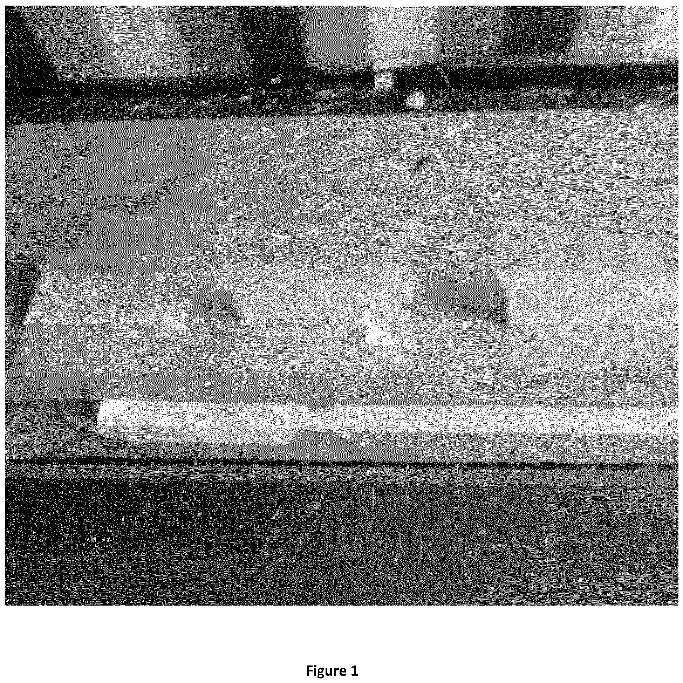

Figure 1 illustrates the Inter-Laminate Adhesion Assessment for butyl stearate (SA1); cetyl palmitate (CP); and ethylhexyl stearoyl polyhydroxystearate (A325).

### Examples: Table 1

| | **Example 1** | **Example 2** | **Example 3** | **Example 4** |
|---|---|---|---|---|
| **Styrene** | 30 parts | 30 parts | 30 parts | |
| **Vinyl Toluene** | | | | 30 parts |
| **D60** | 30 | 30 | 30 | 30 |
| **Paraffin 56/58** | 14 | 14 | 14 | 14 |
| **SA1** | 26 | | | 26 |
| **CP** | | 26 | | |
| **A325** | | | 26 | |

| | |
|---|---|
| D60 | Hydrocarbons C10 - C13, Aromatics < 2%, CAS 64742-48-9 (Shell) |
| Paraffin 56/58 | (Meade King Robinson) |
| SA1 | Butyl Stearate (Stearinerie Dubois) |
| CP | Cetyl Palmitate (Stearinerie Dubois) |
| A325 | Ethylhexyl Stearoyl Polyhydroxystearate (Stearinerie Dubois) |

### Example 1

### Process

SA1 should be pre-conditioned in a warm room at ca. 30°C
Charge styrene, D60 and heat to 70°C
Charge Paraffin and mix until fully dissolved
Re-heat to 50°'C then charge SA1 and mix until fully homogeneous.
Examples 2, 3 & 4 are prepared in a similar manner

### Example 2

### Polyester Resin: General Purpose

This used a medium reactivity Ortho base resin made Thixotropic with 0.8% Fumed Silica and accelerated with 0.2% Cobalt Octoate (10%). The following properties were measured:

### Reactivity at 23°C, 2% MEKP 50

| | |
|---|---|
| Gel time | 17 min |
| Cure time | 26 min |
| Peak exotherm | 160°C |

### Brookfield viscosity at 23°C

| | |
|---|---|
| 50 RPM | 6.5 dPa.s |
| 5 RPM | 20 dPa.s |

### Monomer Content 40%

The above resin base was used in all the Styrene Emission and Inter-Laminate adhesion tests.

The styrene suppressant additives from Table 1 above were pre-conditioned to 30°C then added to the General Purpose resin base with stirring at a resin temperature > 25°C and addition level 1% w/w.

### Example 3

### Styrene Emission Reduction

In each case 1% of the styrene suppressant compound was mixed with the General Purpose resin base. The mix was brought to 20°C, the same as the laboratory temperature, catalysed with 2% MEKP 50 and 20 g was poured onto a 9 cm tin lid. Styrene emission was measured after 30 minutes and 60 minutes together with surface tack assessment. The control is the General Purpose resin without any styrene suppressant compound.

### Example 4

### Inter-Laminate Adhesion Assessment

For each of the resins compositions a 2-Ply laminate was applied with 450 g EB mat, resin to glass 2.5 : 1 w/w, and cured for 48 hrs at 20°C. Each of the laminates was then overlaid with the same composition, 2 Plies and cured for 16 hrs at 20°C. The Inter-Laminate adhesion was qualitatively assessed in terms of the force required to prise the laminate apart and the degree of Fibre Pull-out between the laminates layer. No Fibre Pull-out constitutes adhesive failure between the laminates, a very high degree of Pull-out constitutes cohesive failure, such as with the Control, awarded a result of 5/5. A result of 3/5 represents 60% of the adhesion of the Control.

**Table 2**

| | **SA1** | **CP** | **A325** | **Control** |
|---|---|---|---|---|
| | | | | |
| Styrene Emission at 30 min, g/m² | 18 | 5 | 22 | 47 |
| Styrene Emission at 60 min, g/m² | 22 | 5 | 25 | 58 |
| | | | | |
| Surface Tack at 30min | Tacky | Slight Tack | Tacky | Wet |
| Surface Tack at 60 min | Slight Tack | Tack-free | Slight Tack | Very Tacky |
| | | | | |
| Inter-Laminate Adhesion | 4/5 | 3/5 | 5/5 | 5/5 |

## Claims

**1.** A monomer suppressant additive composition, wherein said additive composition comprises paraffin wax, at least one synergistic wax, at least one hydrocarbon solvent, and at least one reactive diluent.

**2.** A monomer suppressant additive composition according to claim 1 wherein the paraffin wax is present in an amount of from about 5 to about 20% w/w.

**3.** A monomer suppressant additive composition according to claims 1 or 2 wherein the paraffin wax has a melting point in the range of from about 46°C to about 68°C.

**4.** A monomer suppressant additive composition according to any one of the preceding claims wherein the synergistic wax is present in an amount of from about 10 to about 30% w/w.

**5.** A monomer suppressant additive composition according to any one of the preceding claims wherein the synergistic wax comprises a long chain saturated fatty acid ester or a mixture of fatty acid esters with carbon chain length from 16 - 22 carbon atoms.

**6.** A monomer suppressant additive composition according to any one of the preceding claims wherein the hydrocarbon solvent is present in an amount of from about 20 to about 40% w/w.

**8.** A monomer suppressant additive composition according to any one of the preceding claims wherein the hydrocarbon solvent comprises a solvent based on C10-C13 hydrocarbons.

**9.** A monomer suppressant additive composition according to any one of the preceding claims wherein the hydrocarbon solvent has an aromatics level of < 2% w/w.

**10.** A monomer suppressant additive composition according to any one of the preceding claims wherein the reactive diluent is present in an amount of from about 20 to about 40% w/w.

**11.** A monomer suppressant additive composition according to any one of the preceding claims wherein the reactive diluent is a monomer selected from styrene, vinyl toluene, p-methyl styrene and ethyl vinyl benzene; and mixtures thereof.

**12.** A method of manufacturing a polymer, polymer resin, polymer laminate or a polymer material, using a monomer suppressant additive composition according to claim 1, said method comprising a first step of dissolving the paraffin wax in a mixture of the hydrocarbon solvent and the reactive diluent at a temperature not exceeding 70°C; and a second step of dissolving the synergistic wax paraffin wax/ hydrocarbon solvent/ reactive diluent solution at a temperature not exceeding 50°C.

**13.** A method according to claim 12 wherein the additive composition comprises a solution or a paste.

**14.** A method according to claims 12 or 13 wherein the additive composition is incorporated into a polymer, polymer resin, polymer laminate or polymer material at a level of from about 0.5 to about 2.5%w/w.

**15.** A method according to any one of claims 12 to 14 wherein the additive composition is pre-conditioned by warming to a temperature of from about 25 to about 35°C prior to being incorporated into a polymer, polymer resin, polymer laminate or polymer material at a level of from about 0.5 to about 2.5%w/w.
